# EUROPEAN PATENT APPLICATION

(11) **EP 4 810 661 A1**
(43) Date of publication of application: **23.09.2026**
(21) Application number: 26163882.9
(22) Date of filing: 11.03.2026
(51) Int. Cl.: C25B 1/04, C25B 9/63, H01M 8/0273

(54) **ELECTRODE FRAME ASSEMBLIES FOR ELECTROLYTIC CELLS AND CORRESPONDING ELECTROLYTIC CELLS**

(30) Priority: 19.03.2025 CN 202520485099 U
(71) Applicant: Robert Bosch GmbH, 70442 Stuttgart (DE)
(72) Inventor: Hao, Xiaogang, Shanghai, 200335 (CN); XIE, Xu, Shanghai, 200335 (CN); NI, Yang, Shanghai, 200335 (CN)

(57) **Abstract**

The present application relates to the field of electrolytic cells, and in particular, to an electrode frame assembly (100) for an electrolytic cell, comprising: a first electrode frame (1) and a second electrode frame (2); and a seal (3) clamped between the first and second electrode frames, wherein a first sealing lip structure (11) and a second sealing lip structure (21) are formed at respective interfaces of the first and second electrode frames with the seal, where at least one of the first and second sealing lip structures comprises a protrusion (12, 22) extending from the respective first or second electrode frame into the seal (3), and the electrode frame assembly has a plurality of sealing regions, where in at least two of which, the first sealing lip structure and/or second sealing lip structure have different protrusion structural features. Therefore, the electrode frame assembly can have improved sealing performance. The present application further relates to a corresponding electrolytic cell.

## Description

### Technical Field

This application relates to the field of electrolytic cells, and in particular to an electrode frame assembly for an electrolytic cell and a corresponding electrolytic cell.

### Background Art

An electrolytic cell is a device that uses electrical energy to carry out electrochemical reactions, causing electrolytes to undergo oxidation-reduction reactions, thereby achieving the purpose of preparing, purifying, and decomposing substances. An electrolytic cell typically contains an anode, a cathode, and an electrolyte. When an external DC power supply is connected, current flows through the electrolyte, where an oxidation reaction occurs at the anode and electrons flow out; and a reduction reaction occurs at the cathode and electrons flow in. Electrolytes can be in different forms, such as aqueous solutions, molten salts, or nonaqueous solutions. Different electrolytes, electrode materials, and electrolytic cell structures determine the specific applications and performance characteristics of the electrolytic cell.

The electrode frame assembly is one of the core components of an electrolytic cell. The electrode frame assembly provides mechanical support and electrical connection for the electrodes and diaphragm. An electrode frame assembly typically comprises two electrode frames arranged opposite each other and a seal sandwiched between the two electrode frames, with the seal provided by the compression of the seal by the electrode frames. Accordingly, the structural design of the electrode frame assembly is crucial to the sealing performance of the electrolytic cell.

Currently, polytetrafluorethylene (PTFE) is typically employed as the seal in the electrode frame assembly. However, PTFE exhibits creep, which means that over time PTFE may deform or even crack, leading to a deterioration in the sealing performance of the electrode frame assembly. In addition, existing electrode frame designs have external sealing structures, but their internal sealing requirements are often overlooked.

Therefore, it is necessary to propose an electrolytic cell electrode frame assembly and an electrolytic cell with improved sealing performance.

### Summary of the Utility Model

The purpose of this application is to provide an improved electrode frame assembly for an electrolytic cell to solve at least one of the aforementioned and other unmentioned problems in the prior art.

According to a first aspect of the present application, an electrode frame assembly for an electrolytic cell is provided, comprising: a first electrode frame and a second electrode frame; and a seal clamped between the first and second electrode
frames, wherein a first sealing lip structure and a second sealing lip structure are formed at respective interfaces of the first and second electrode frames with the seal, where at least one of the first and second sealing lip structures comprises a protrusion extending from the respective first or second electrode frame into the seal, and the electrode frame assembly has a plurality of sealing regions, where in at least two of which, the first sealing lip structure and/or second sealing lip structure have different protrusion structural features.

According to one optional example of the present application, the electrode frame assembly comprises: an outer peripheral region located on the periphery; and at least one inner region surrounded by the outer peripheral region, wherein the sum of the number of the protrusions of the first sealing lip structure and the second sealing lip structure of the outer peripheral region is greater than that of a single inner region.

According to one optional example of the present application, the inner region comprises: a curved region adjacent to the gas through hole of the electrode frame assembly; a linear region away from the gas through hole; and a confluence region connecting the curved region and the linear region, wherein the sealing lip structure in the curved region, the sealing lip structure in the linear region, and the sealing lip structure in the confluence region have different protrusion structural features.

According to one optional example of the present application, in the outer peripheral region, the first sealing lip structure and the second sealing lip structure each have the same number of protrusions, and the protrusions from the first sealing lip structure and the second sealing lip structure are arranged in a staggered manner.

According to one optional example of the present application, in the outer peripheral region, the first sealing lip structure and the second sealing lip structure have 8 protrusions.

According to one optional example of the present application, the projections of the protrusions from the first sealing lip structure and the second sealing lip structure in the vertical direction of the electrode frame assembly do not overlap.

According to one optional example of the present application, in the curved region, only the first sealing lip structure has a protrusion.

According to one optional example of the present application, in the linear region, the first sealing lip structure and the second sealing lip structure each have the same number of protrusions, and the protrusions from the first sealing lip structure and the second sealing lip structure are arranged in a staggered manner.

According to one optional example of the present application, in the confluence region, the first sealing lip structure and the second sealing lip structure each have the same number of protrusions, and the protrusions from the first sealing lip structure and the second sealing lip structure are aligned with each other and their projections in the vertical direction of the electrode frame assembly do not overlap.

According to one optional example of the present application, in the curved region, the first sealing lip structure has 4 protrusions.

According to one optional example of the present application, in the linear region, the first sealing lip structure and the second sealing lip structure each have 4 protrusions.

According to one optional example of the present application, in the linear region, the projections of the protrusions from the first sealing lip structure and the second sealing lip structure in the vertical direction of the electrode frame assembly do not overlap.

According to one optional example of the present application, in the confluence region, the first sealing lip structure and the second sealing lip structure each have 4 protrusions.

According to one optional example of the present application, the height of the protrusions is less than half the thickness of the seal.

According to one optional example of the present application, the protrusions have the same height.

According to one optional example of the present application, the protrusions have an arcuate profile that gradually narrows from bottom to top.

According to one optional example of the present application, the protrusions are arranged periodically, and the ratio of the width of the protrusions to the period length is greater than zero and less than or equal to 1.

According to one optional example of the present application, the ratio of the height to the width of the protrusions is in the range of 0.1 to 0.67.

According to one optional example of the present application, the radius r of the protrusions is in the range of 0.1 mm to 0.5 mm.

According to one optional example of the present application, the height of the protrusions is less than or equal to one-tenth of the thickness of the seal.

According to one optional example of the present application, the period length of the protrusions is in the range of 1 mm to 2 mm.

According to one optional example of the present application, the height of the protrusions is in the range of 0.1 mm to 0.2 mm.

According to one optional example of the present application, the width of the protrusions is in the range of 0.3 mm to 1 mm.

According to a second aspect of the present application, an electrolytic cell is provided, comprising any of the electrode frame assemblies according to the present application.

Advantageously, by designing different sealing lip structures specifically for regions with different sealing requirements in the electrode frame assembly, optimized and improved overall sealing performance can be achieved relative to existing electrode frame assemblies. In addition, through the meticulous design of the protruding structural features of the electrode frame, a more uniform and smaller compressive stress field can be generated in the seal compared to existing electrode frame assemblies, thereby mitigating or even completely avoiding cracking of seals with creep characteristics.

It is worth noting that the advantages and beneficial effects of the present application are not limited to the advantages and beneficial effects mentioned above, and those skilled in the art can understand other advantages and beneficial effects not mentioned in the present application through the following detailed embodiments and claims.

### Description of Attached Drawings

In the following, the present application is described in greater detail with reference to the accompanying drawings to provide a better understanding of its principles, features, and advantages. In the accompanying drawings:
FIG. 1 is a cross-sectional schematic diagram of an existing electrode frame assembly for an electrolytic cell, wherein (a) shows the components not assembled together, and (b) shows the components assembled together;
FIG. 2 is a cross-sectional schematic diagram of an electrode frame assembly for an electrolytic cell according to one example of the present application, wherein (a) shows the components not assembled together, and (b) shows the components assembled together;
FIG. 3 is a schematic diagram of the sealing lip structure and dimensions of an electrode frame according to one example of the present application;
FIG. 4 is a top view schematic diagram of the electrode frame in an electrode frame assembly according to one example of the present application; and
FIG. 5(a)-FIG. 5(d) are model cross-sectional views of the sealing lip structure in the different sealing regions shown in FIG. 4.

### List of Reference Numerals

- 100': Existing electrode frame assembly
- 1', 2': Electrode frame
- 11', 21': Sealing lip structure
- 12', 22': Recess
- 3': Seal
- 100: Electrode frame assembly according to the present application
- 1, 2: Electrode frame
- 11, 21: Sealing lip structure
- 12, 22: Protrusion
- 3: Seal
- 4: Gas through hole

### Detailed Description of the Embodiments

To provide a clearer understanding of the technical problems, technical solutions, and beneficial technical effects to be addressed by the present application, the following detailed description of the present application will be provided with reference to the accompanying drawings and multiple exemplary examples. It should be understood that the specific examples described herein are provided solely for the purpose of explaining the principles of the present application and not for limiting the scope of protection of the present application. In the various drawings of the present application, features with the same structure or similar functions are represented by the same or similar reference signs. The figures are not drawn to exact scale, but are exaggerated for clarity.

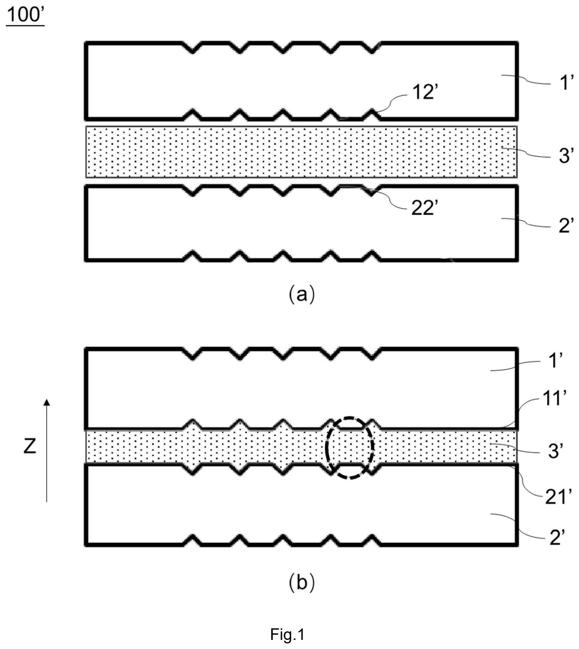

FIG. 1 schematically shows a longitudinal section along its vertical direction Z of an existing electrode frame assembly 100' for an electrolytic cell. As shown in FIG. 1, the existing electrode frame assembly 100' comprises a first electrode frame 1' and a second electrode frame 2' and a seal 3' clamped between the first electrode frame 1' and the second electrode frame 2'. The main extension surfaces of the electrode frames 1' and 2' and the seal 3' extend substantially perpendicular to the vertical direction Z of the electrode frame assembly; that is, the three are stacked in the vertical direction Z of the electrode frame assembly. The first electrode frame 1' and the second electrode frame 2' each have inwardly recessed recesses 12' and 22' on their respective two surfaces along the vertical direction Z. In the assembled (i.e., clamped) state, the seal 3' deforms under the relative compression of the two electrode frames and fills into the recesses 12' and 22', thereby forming a first sealing lip structure 11' at the interface between the first electrode frame 1' and the seal 3' and a second sealing lip structure 21' at the interface between the second electrode frame 2' and the seal 3'. Thus, the first sealing lip structure 11' comprises the recess 12' of the first electrode frame 1' and the second sealing lip structure 21' comprises the recess 22' of the second electrode frame 2'. As the recess 12' of the first electrode frame 1' and recess 22' of the second electrode frame 2' align with each other in the vertical direction Z, the first sealing lip structure 11' and the second sealing lip structure 21' are also aligned with each other in the vertical direction Z; that is, the existing electrode frame assembly has vertically aligned sealing lip structures. On the lateral extension dimension of the seal 3' (the extension dimension perpendicular to the vertical direction Z), since each recess forms a corresponding sealing line, a pair of vertically aligned recesses 12' also form a corresponding sealing line relative to the seal 3'. Taking the structure shown in FIG. 1 as an example, 5 sealing lines may be formed accordingly, and the number of sealing interfaces is 5.

After the electrode frame assembly is assembled and clamped, the seal remains under compressive stress. Plastic seals (such as seals made of PTFE) typically exhibit creep characteristics, which cause them to gradually undergo plastic deformation under prolonged stress and temperature, even at lower temperatures. Moreover, over time, this plastic deformation accumulates, eventually leading to crack initiation and propagation, until it breaks down, resulting in seal failure and leakage and potentially causing short circuits, especially in high-voltage applications. For existing vertically aligned sealing lip structures, the seal 3' is susceptible to large compressive stress in its narrow section (e.g., the area encompassed by the dashed ellipse in FIG. 1), which increases the likelihood of creep cracking there, limiting the service life of the electrode frame assembly and the electrolytic cell.

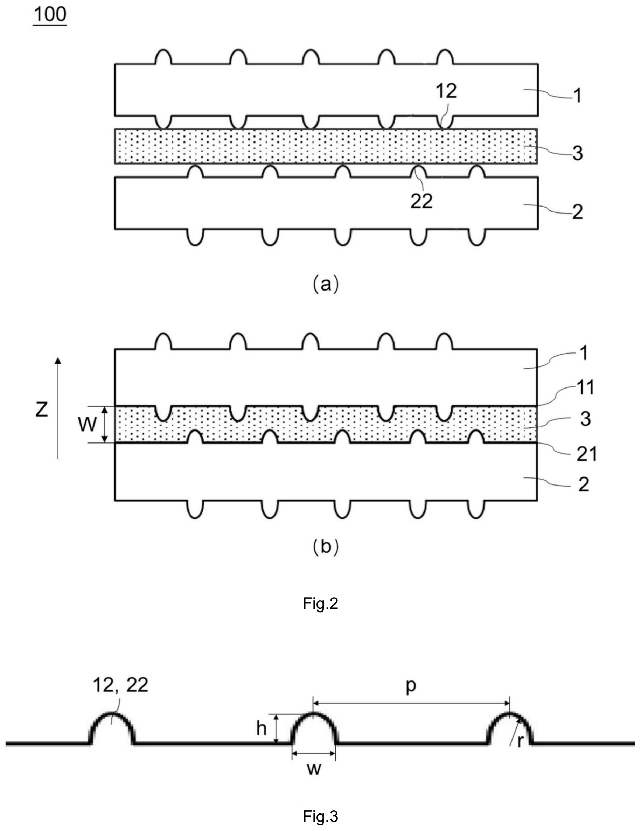

FIG. 2 schematically shows a longitudinal section of an electrode frame assembly 100 for an electrolytic cell along its vertical direction Z according to one example of the present application. As shown in FIG. 2, the electrode frame assembly 100 comprises a first electrode frame 1 and a second electrode frame 2 and a seal 3 clamped between the first electrode frame 1 and the second electrode frame 2. The first electrode frame 1, the seal 3, and the second electrode frame 2 are stacked in the vertical direction Z of the electrode frame assembly. A first sealing lip structure 11 and a second sealing lip structure 21 are formed at respective interfaces of the first electrode frame 1 and the second electrode frame 2 with the seal 3.

In particular, at least one of the first sealing lip structure 11 and the second sealing lip structure 21 comprises a protrusion 12, 22 extending from the respective first electrode frame 1 or second electrode frame 2 into the seal 3. That is, in an example where the first sealing lip structure 11 comprises a protrusion, the first sealing lip structure 11 comprises a protrusion 12 extending from the first electrode frame 1 into the seal 3; in an example where the second sealing lip structure 21 comprises a protrusion, the second sealing lip structure 21 comprises a protrusion 22 extending from the second electrode frame 2 into the seal 3. As a result, when the electrode frame assembly is assembled and clamped, the protrusion will be pressed into the interior of the seal 3. In contrast to the recesses on the electrode frame in existing electrode frame assemblies, the protrusions on the electrode frame in the electrode frame assembly according to the present application can reduce the compressive stress level inside the seal 3 in the assembled state of the electrode frame assembly, particularly reducing the compressive stress level in the narrow section circled by the dashed ellipse in FIG. 1 and thereby slowing down or even preventing creep cracking of the seal 3.

Furthermore, the electrode frame assembly 100 may have a plurality of sealing regions A, B, C, and D, and in at least two of these regions, the first sealing lip structure 11 and/or the second sealing lip structure 21 have different protrusion structural features. Here, the sealing region of the electrode frame assembly 100 can be divided according to different sealing needs. The term "protrusion structural features" may comprise at least one of the shape, size, and arrangement of the protrusion. As such, electrode frame protrusions in each region of the electrode frame assembly can be designed and provided in a targeted manner, thereby utilizing protrusions with specific structural features to meet the different sealing requirements of each region.

Preferably, the height h of the protrusions 12 and 22 (as shown in FIG. 3) may be greater than zero and less than half the thickness W of the seal 3 (as shown in FIG. 2). Here, the height h of the protrusion refers to its extension dimension in the vertical direction Z of the electrode frame assembly 100 relative to the main extension surface (i.e., the reference surface) of the corresponding electrode frame. The thickness W of the seal refers to the extension dimension in the vertical direction Z of the seal 3 at the point without protrusions in the assembled electrode frame assembly 100. That is, in examples where both the first sealing lip structure 11 and the second sealing lip structure 21 comprise protrusions 12 and 22, the projections of the protrusion 12 from the first sealing lip structure 11 and the protrusion 22 from the second sealing lip structure 21 in the vertical direction Z of the electrode frame assembly 100 do not overlap (see FIG. 2). Thus, even in examples where the protrusions from the first sealing lip structure 11 and the second sealing lip structure 21 are aligned with each other in the vertical direction Z of the electrode frame assembly 100, the two aligned protrusions on each straight line extending along the vertical direction Z of the electrode frame assembly 100 will not come into contact with each other. Further, the height h of the protrusions 12 and 22 may preferably be less than or equal to one-tenth of the thickness W of the seal 3.

On the one hand, compared to a flat electrode frame with zero protrusion height, the presence of the protrusion can increase the contact area between the electrode frame and the seal, thereby improving the sealing effect and preventing gas and liquid leakage.

On the other hand, the smaller protrusion allows the main body of the seal 3 to maintain its basic linear extension, while only the surface close to the electrode frame is subjected to local deformation due to the compression of the protrusion. This can help make the stress distribution inside the seal 3 more uniform and avoid creep cracking of the seal 3 to a greater extent.

Preferably, the various protrusions 12 and 22 may all have the same height h. Additionally or alternatively, the protrusions 12 and 22 may have an arcuate profile that gradually narrows from bottom to top. This helps to create a uniform compressive stress field in the seal 3, thereby avoiding local stress concentration and the resulting creep cracking.

Preferably, the protrusions 12 and 22 may be arranged periodically, and as shown in FIG. 3, the ratio w/p of the width w of the protrusions 12 and 22 to the period length p is greater than zero and less than or equal to 1. Advantageously, the structural features of the small and dispersed arrangement of the protrusions can result in small and uniform compressive stress generated inside the seal 3 in the assembled (or clamped) state, which helps to mitigate or even avoid creep cracking of the seal 3 due to compressive stress. Here, as shown in FIG. 3, the term "period length p" may refer to the distance between the central axes of two adjacent protrusions in a single sealing structure or between any corresponding feature points (e.g., the start and end points of two adjacent protrusions). The width w of the protrusion refers to the maximum lateral extension dimension of a single protrusion. Exemplarily and preferably, the period length p of the protrusions 12 and 22 may be in the range of 1 mm to 2 mm. Additionally or alternatively, the height h of the protrusions 12 and 22 may be in the range of 0.1 mm to 0.2 mm.

Preferably, the ratio of the height h to the width w (i.e., the height-to-width ratio) h/w of the protrusions 12 and 22 is in the range of 0.1 to 0.67. It has been shown that a height-to-width ratio within this range can result in a more uniform stress distribution, thereby achieving better creep resistance. Exemplarily and preferably, the width w of the protrusions 12 and 22 may be in the range of 0.3 mm to 1 mm.

Optionally, the radius r of the protrusions 12 and 22 may be in the range of 0.1 mm to 0.5 mm, considering the difficulty of processing.

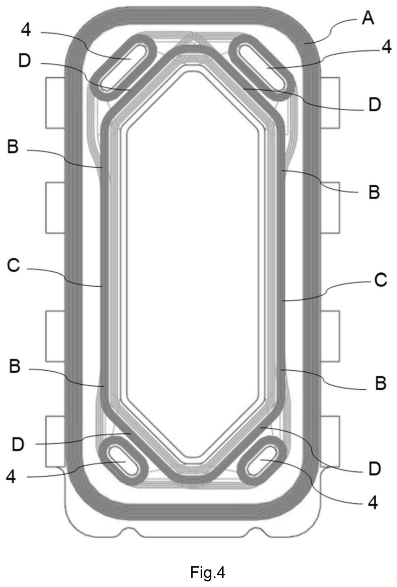

FIG. 4 shows a top schematic view of an electrode frame assembly according to one example of the present application; that is, a schematic diagram viewed downward along its vertical direction Z, showing the division of the various sealing regions. The electrode frame assembly in each sealing region is designed with sealing lip structures that have different protrusion structural features. From this perspective, sealing lip structures are closed annular structures, with each sealing lip structure corresponding to a sealing line. Additionally, the dark gray and light gray areas in FIG. 4 show the sealing lip structures arranged for the anode and cathode pathways, respectively.

As shown in FIG. 4, the electrode frame assembly 100 may comprise an outer peripheral region A located on the periphery and at least one inner region B, C, D surrounded by the outer peripheral region A. Because the external air pressure of the electrode frame assembly 100 is about one atm, or about 0.1 MPa, and the internal air pressure can reach about 3 MPa, for example, the large pressure difference leads to a greater need for external seals to prevent gas and liquid from leaking to the outside. Therefore, advantageously, the sum of the number of protrusions 12 and 22 of the first sealing lip structure 11 and the second sealing lip structure 21 of the outer peripheral region A is greater than that of individual inner regions B, C, and D. Exemplarily, in the outer peripheral region A, at least one of the first sealing lip structure 11 and the second sealing lip structure 21 has a protrusion. Therefore, more protrusions can correspond to the formation of more sealing lines and sealing interfaces, thereby achieving better sealing performance in the outer peripheral region A compared to the inner region, so as to better prevent gas leakage to the outside of the electrode frame assembly or electrolytic cell.

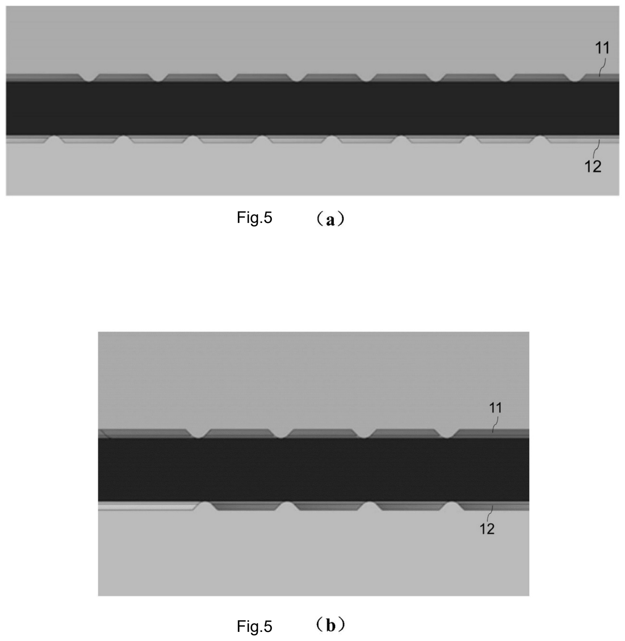

FIG. 5(a)-FIG. 5(d) are exemplary model cross-sectional views of the sealing lip structure in the different regions shown in FIG. 4.

FIG. 5(a) shows an exemplary model cross-sectional view of the sealing lip structure in the outer peripheral region A. As shown in the figure, in this exemplary outer peripheral region A, the first sealing lip structure 11 and the second sealing lip structure 21 may each have the same number of protrusions 12 and 22, and the protrusions 12 and 22 from the first sealing lip structure 11 and the second sealing lip structure 21 are arranged in a staggered manner. In this case, a pair of protrusions staggered in the vertical direction Z of the electrode frame assembly 100 press the seal with a certain lateral offset. In fact, it can be regarded as each protrusion pressing the seal from one side of the seal 3 (there is no protrusion on the opposite side). Compared with the scheme of aligning with each other in the vertical direction Z of the electrode frame assembly 100 to press the seal from both sides in opposite directions, this can effectively reduce the local compressive stress value and the overall compressive stress value in the seal 3, promoting the formation of a uniform stress distribution at the sealing lip and thereby reducing the possibility of cracking; furthermore, the number of sealing lines can be doubled with a compact structure.

Exemplarily and preferably, in the outer peripheral region A, the first sealing lip structure 11 and the second sealing lip structure 21 may each have 8 protrusions 12 and 22. As such, in the lateral extension dimension of the seal 3, 16 sealing lines can be formed in the outer peripheral region A, and the number of sealing interfaces is 16, which can provide higher external sealing reliability.

As shown in FIG. 4, the at least one inner region may comprise a curved region D, a linear region C, and a confluence region B. Of which, the curved region D is the region adjacent to the gas through hole 4 of the electrode frame assembly 100, the linear region C is the region away from the gas through hole 4, and the confluence region B is the transition region connecting the curved region D and the linear region C.

In particular, the sealing lip structure in the curved region D, the sealing lip structure in the linear region C, and the sealing lip structure in the confluence region B have different protrusion structural features. In existing electrode frame assemblies, often only the design of the external sealing structure at the outer peripheral region A receives focus, while the sealing requirements in the inner region are neglected; that is, preventing the corresponding gases generated at the anode and cathode from leaking through the sealing material. Advantageously, some examples of the present application provide an electrode frame assembly that can also be designed with a sealing lip structure featuring targeted protrusion structural features in the inner region, thereby achieving an improved internal seal, which is particularly advantageous for preventing cross-contamination of anode and cathode gases.

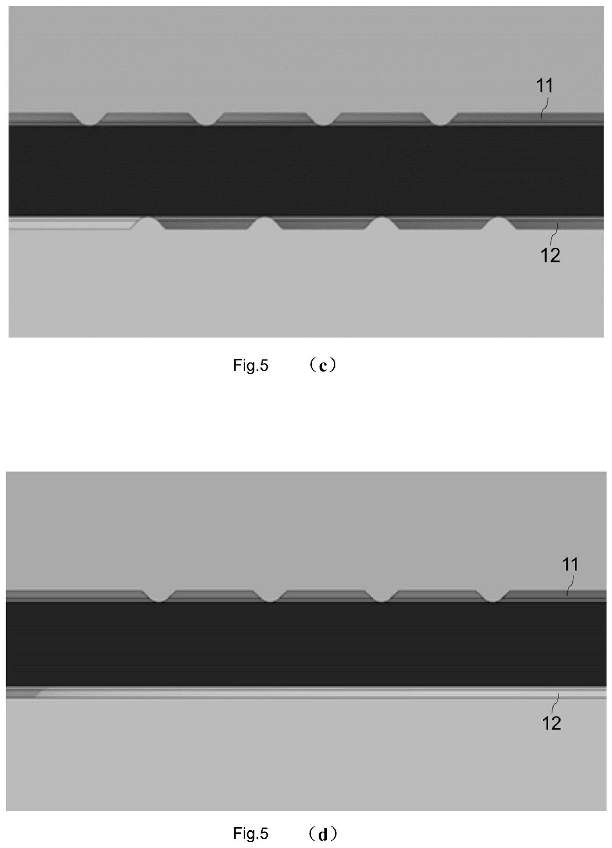

FIG. 5(d) shows an exemplary model cross-sectional view of the sealing lip structure in the curved region D. Because the curved region D is adjacent to the gas through hole 4, where the gas through hole 4 may be a gas inlet or a gas outlet, due to the limitations of the flow channel structure, the curved region D can only have protrusions arranged on the electrode frame away from the flow channel to form a sealing lip structure, thereby preventing the deformed seal from blocking the flow channel opening. To this end, as shown in the figure, in the curved region D, only the first sealing lip structure 11 has a protrusion 12. Exemplarily, in the curved region D, the first sealing lip structure 11 may have 4 protrusions 12. As such, on the lateral extension dimension of the seal 3, 4 sealing lines can be formed in the curved region D, and the number of sealing interfaces is 4.

FIG. 5(c) shows an exemplary model cross-sectional view of the sealing lip structure in the linear region C. The linear region C is the region that mainly provides internal sealing to prevent gas from flowing between the cathode and anode. Therefore, in the linear region C, the first sealing lip structure 11 and the second sealing lip structure 21 both have the same number of protrusions 12 and 22, and the protrusions 12 and 22 from the first sealing lip structure 11 and the second sealing lip structure 21 are arranged in a staggered manner; that is, the projections of the protrusions 12 and 22 from the first sealing lip structure 11 and the second sealing lip structure 21 in the vertical direction Z of the electrode frame assembly 100 do not overlap. This is similar to the protruding structural features of the sealing lip in the outer peripheral region A, which also utilizes the staggered arrangement of the two protrusions to achieve enhanced sealing performance. In contrast, in the linear region C, the first sealing lip structure 11 and the second sealing lip structure 21 may each have 4 protrusions 12 and 22. As such, on the lateral extension dimension of the seal 3, 8 sealing lines can be formed within the linear region C, and the number of sealing interfaces is 8. Advantageously, by applying a vertically staggered sealing lip structure design to both the outer peripheral region A of the external seal and the linear region C of the main internal seal, the number of sealing interfaces can be doubled over the same length, thereby significantly improving the stability and reliability of the sealing structure.

FIG. 5(b) shows an exemplary model cross-sectional view of the sealing lip structure in the confluence region B. The confluence region B is designed to achieve a transition between the curved region D and the linear region C. Considering smooth transition and process factors, in the confluence region B, the first sealing lip structure 11 and the second sealing lip structure 21 may each have the same number of protrusions 12 and 22, and the protrusions 12 and 22 from the first sealing lip structure 11 and the second sealing lip structure 21 are aligned with each other and their projections in the vertical direction of the electrode frame assembly 100 do not overlap. This enables an optimized transition and ensures effective internal sealing performance.

Exemplarily, in the confluence region B, the first sealing lip structure 11 and the second sealing lip structure 21 may each have 4 protrusions 12 and 22. As such, on the lateral extension dimension of the seal 3, 4 sealing lines can be formed within the confluence region B, and the number of sealing interfaces is 4.

By developing three different sealing lip structure designs for the three different sealing regions corresponding to the internal seal, the possibility of internal leakage can be significantly reduced, while also taking into account other factors such as structural adaptability and process implementation.

The examples of the present application further relate to an electrolytic cell comprising any of the electrode frame assemblies 100 according to the present application. In an exemplary embodiment, the electrolytic cell may be, in particular, an alkaline electrolytic cell (AEC), the working principle of which is that in the AEC, an alkaline solution such as potassium hydroxide is used as the electrolyte. After pure water enters the cathode, under the action of a catalyst, water molecules gain electrons to generate hydrogen gas and hydroxide ions. The hydroxide ions pass through the alkaline solution through the diaphragm or porous membrane to reach the anode, where they lose electrons to generate oxygen and water, thereby realizing the electrolysis of water and decomposing water into hydrogen gas and oxygen gas. Alternatively, in other exemplary examples, the electrolytic cell may also be, in particular, a proton exchange membrane electrolytic cell (PEMEC) or an alkaline anion exchange membrane electrolytic cell (AEMEC). Structurally, the electrolytic cell may comprise an anode, a cathode, a diaphragm, an electrolyte, and an electrode frame assembly, particularly comprising any of the electrode frame assemblies 100 described above according to the examples of the present application.

According to some examples of the present application, by designing different sealing lip structures specifically for regions with different sealing requirements in the electrode frame assembly, optimized and improved overall sealing performance can be advantageously achieved relative to existing electrode frame assemblies. In addition, through the meticulous design of the protruding structural features of the electrode frame, a more uniform and smaller compressive stress field can be generated in the seal compared to existing electrode frame assemblies, thereby mitigating or even completely avoiding cracking of seals with creep characteristics.

It is worth mentioning that in this document, terms such as "first," "second," etc., are used for descriptive purposes only and should not be construed as indicating or implying relative importance. Furthermore, such terms should not be understood as implying a specific quantity of the indicated technical features. Features defined as "first" and "second" may expressly or implicitly mean that at least one of the features is included.

It should also be noted that in the description of this embodiment, the use of terms such as "upper," "lower," "front," "rear," "top," "bottom," "inner," and "outer" to indicate the orientation or positional relationship of the constituent elements with reference to the accompanying drawings is only for the convenience of describing this specification and simplifying the description, and is not intended to indicate or imply that the device or element referred to has a specific orientation, or is constructed and operated in a specific orientation, and therefore should not be construed as a limitation of this utility model. The positional relationships of the constituent elements change appropriately according to the orientation of each constituent element being described. Therefore, the wording is not limited to what is stated in the specification and can be appropriately replaced as needed.

In addition, in the description of the present application, the terms "installing," "connecting," etc., unless expressly specified and defined otherwise, shall be broadly understood, e.g., may be fixed mounting/connecting, removable mounting/connecting, or integrally mounting/connecting; may be direct mounting/connecting, or may be indirectly installing/connecting through intermediate media, and may also allow communication within two elements. For those of ordinary skill in the art, the specific meaning of the above terms in the present application can be understood in a specific context.

Without mutual contradiction, those skilled in the art may combine and integrate the different embodiments or examples described in this specification and the features of different embodiments or examples. Various substitutions, alterations, and modifications may be conceived without departing from the spirit and scope of the present application.

## Claims

1. An electrode frame assembly for an electrolytic cell, wherein the electrode frame assembly (100) comprises:
a first electrode frame (1) and a second electrode frame (2); and
a seal (3) clamped between the first electrode frame (1) and the second electrode frame (2),
wherein a first sealing lip structure (11) and a second sealing lip structure (21) are formed at respective interfaces of the first electrode frame (1) and the second electrode frame (2) with the seal (3),
where at least one of the first sealing lip structure (11) and the second sealing lip structure (21) comprises a protrusion (12, 22) extending from the respective first electrode frame (1) or second electrode frame (2) into the seal (3), and
the electrode frame assembly (100) has a plurality of sealing regions, where in at least two of which, the first sealing lip structure (11) and/or second sealing lip structure (21) have different protrusion structural features.

2. The electrode frame assembly for an electrolytic cell according to Claim 1, wherein the electrode frame assembly (100) comprises:
an outer peripheral region located on the periphery; and
at least one inner region surrounded by the outer peripheral region,
wherein the sum of the number of the protrusions (12, 22) of the first sealing lip structure (11) and the second sealing lip structure (21) of the outer peripheral region is greater than that of a single inner region.

3. The electrode frame assembly for an electrolytic cell according to Claim 2, wherein the inner region comprises:
a curved region adjacent to the gas through hole (4) of the electrode frame assembly (100);
a linear region away from the gas through hole (4); and
a confluence region connecting the curved region and the linear region,
wherein the sealing lip structure in the curved region, the sealing lip structure in the linear region, and the sealing lip structure in the confluence region have different protrusion structural features.

4. The electrode frame assembly for an electrolytic cell according to Claim 2 or 3, wherein,
in the outer peripheral region, the first sealing lip structure (11) and the second sealing lip structure (21) each have the same number of protrusions (12, 22), and
the protrusions (12, 22) from the first sealing lip structure (11) and the second sealing lip structure (21) are arranged in a staggered manner.

5. The electrode frame assembly for an electrolytic cell according to Claim 4, wherein,
in the outer peripheral region, the first sealing lip structure (11) and the second sealing lip structure (21) each have 8 protrusions (12, 22); and/or
the projections of the protrusions (12, 22) from the first sealing lip structure (11) and the second sealing lip structure (21) in the vertical direction of the electrode frame assembly (100) do not overlap.

6. The electrode frame assembly for an electrolytic cell according to Claim 3, wherein,
in the curved region, only the first sealing lip structure (11) has a protrusion (12); and/or
in the linear region, the first sealing lip structure (11) and the second sealing lip structure (21) each have the same number of protrusions (12, 22), and the protrusions (12, 22) from the first sealing lip structure (11) and the second sealing lip structure (21) are arranged in a staggered manner; and/or
in the confluence region, the first sealing lip structure (11) and the second sealing lip structure (21) each have the same number of protrusions (12, 22), and the protrusions (12, 22) from the first sealing lip structure (11) and the second sealing lip structure (21) are aligned with each other and their projections in the vertical direction of the electrode frame assembly (100) do not overlap.

7. The electrode frame assembly for an electrolytic cell according to Claim 6, wherein,
in the curved region, the first sealing lip structure (11) has 4 protrusions (12); and/or
in the linear region, the first sealing lip structure (11) and the second sealing lip structure (21) each have 4 protrusions (12, 22); and/or
in the linear region, the projections of the protrusions (12, 22) from the first sealing lip structure (11) and the second sealing lip structure (21) in the vertical direction of the electrode frame assembly (100) do not overlap; and/or
in the confluence region, the first sealing lip structure (11) and the second sealing lip structure (21) each have 4 protrusions (12, 22).

8. The electrode frame assembly for an electrolytic cell according to any one of Claims 1-3 and 5-7, wherein
the height of the protrusions (12, 22) is less than half the thickness of the seal (3); and/or
the protrusions (12, 22) have the same height; and/or
the protrusions (12, 22) have an arcuate profile that gradually narrows from bottom to top; and/or
the protrusions (12, 22) are arranged periodically, and the ratio of the width of the protrusions (12, 22) to the period length is greater than zero and less than or equal to 1; and/or
the ratio of the height to the width of the protrusions (12, 22) is in the range of 0.1 to 0.67; and/or
the radius of the protrusions (12, 22) is in the range of 0.1 mm to 0.5 mm.

9. The electrode frame assembly for an electrolytic cell according to Claim 8, wherein
the height of the protrusions (12, 22) is less than or equal to one-tenth of the thickness of the seal (3); and/or
the period length of the protrusions (12, 22) is in the range of 1 mm to 2 mm; and/or the height of the protrusions (12, 22) is in the range of 0.1 mm to 0.2 mm; and/or the width of the protrusions (12, 22) is in the range of 0.3 mm to 1 mm.

10. An electrolytic cell comprising the electrode frame assembly (100) according to any one of Claims 1-9.
